# EUROPEAN PATENT APPLICATION

(11) **EP 2 337 239 A1**
(43) Date of publication of application: **22.06.2011**
(21) Application number: 10194390.0
(22) Date of filing: 09.12.2010
(51) Int. Cl.: H04B 7/26, H04W 16/26

(54) **Control apparatus, relay apparatus and control method of these apparatuses**

(30) Priority: 16.12.2009 JP 2009285760
(71) Applicant: CANON KABUSHIKI KAISHA, Ohta-ku Tokyo 146-8501 (JP)
(72) Inventor: Inohiza, Hirohiko, Ohta-ku Tokyo (JP)
(74) Representative: Derham, Cassandra Virginie

(57) **Abstract**

A control apparatus (101) used in a system in which a transmission source apparatus transmits identical data to a destination apparatus (102) a plurality of times via a plurality of different paths that are formed by a combination of communication paths through which two communication apparatuses directly communicate with each other, includes acquisition means (307) configured to acquire communication quality information for each antenna orientation of each of communication apparatuses forming the communication paths, selection means (309) configured to select a plurality of paths exhibiting high communication quality, based on the communication quality information acquired by the acquisition means (307), and first determination means (338) configured to determine a timing of switching an antenna orientation of each of the communication apparatuses in each of the paths selected by the selection means (309) to an orientation of each of the selected paths.

## Description

### BACKGROUND OF THE INVENTION

### Field of the Invention

The present invention relates to a technique to transmit data via a plurality of paths.

### Description of the Related Art

When communication apparatuses transfer data such as audio data and video data, for which synchronism or isochronism is required, it is preferable that fluctuations in data transfer delay amount (delay jitter) are small. For this reason, a synchronous data transfer system is often used. In this system, each of the communication apparatuses transmits data by using a time slot allocated thereto based on a time division multiple access (TDMA) protocol or the like.

In the synchronous data transfer system, since each of the communication apparatuses can acquire a data transmission right at a constant cycle, delay jitter in data transfer is small. Thus, this system is suitable for data transfer requiring synchronism or isochronism.

However, if loss of data such as audio data and video data occurs, even if a transmission apparatus retransmits the data, a reception apparatus may not be able to receive and reproduce the data appropriately. In such cases, for example, reproduction of the audio data is interrupted or block noise is caused in the video data, resulting in degradation of application quality. Thus, it is important that communication partners receive data reliably.

As a technique to improve reliability of data transfer, Japanese Patent Application Laid-Open No. 2009-49932 discusses a relay transmission system. In such a relay transmission system, identical data is transferred via a plurality of paths. More specifically, a control apparatus transmits data to a plurality of subordinate apparatuses via broadcast transmission, and the plurality of subordinate apparatuses relay the data received from the control apparatus among the plurality of subordinate apparatuses. In this way, reliability of data transmission can be improved.

In addition, Japanese Patent Application Laid-Open No. 2001-86050 discusses a technique to improve data reception quality. Based on this technique, communication apparatuses control antenna orientations thereof and transmit data to base stations.

However, if data is transmitted using broad antenna radiation patterns, reception quality is decreased. On the other hand, to improve reception quality, if data is transmitted with narrow antenna radiation patterns, the communication is easily blocked by obstacles such as people or objects.

### SUMMARY OF THE INVENTION

Embodiments of the present invention are directed to a technique that attempts to improve reception quality of data received by a destination apparatus, the destination apparatus receiving the data transmitted by a transmission source apparatus via a plurality of different paths a plurality of times.

According to a first aspect of the present invention, there is provided a control apparatus as specified in claims 1 to 14. According to a second aspect of the present invention, there is provided a relay apparatus as specified in claim 15. According to a third aspect of the present invention, there is provided a system as specified in claim 16. According to a fourth aspect of the present invention, there is provided a method for controlling the control apparatus and the relay apparatus as specified in clams 17 and 18, respectively.

Further features and aspects of the present invention will become apparent from the following detailed description of exemplary embodiments with reference to the attached drawings.

### BRIEF DESCRIPTION OF THE DRAWINGS

The accompanying drawings, which are incorporated in and constitute a part of the specification, illustrate exemplary embodiments, features, and aspects of the invention and, together with the description, serve to explain the principles of the invention.

Figs. 1A and 1B illustrates configurations of a communication system.

Fig. 2 illustrates a configuration of a superframe used in wireless communication.

Fig. 3 illustrates a hardware configuration of a control node.

Figs. 4A to 4D illustrate antenna radiation patterns including antenna orientations.

Fig. 5 is a flow chart illustrating an operation executed by the control node.

Fig. 6 is a flow chart illustrating an operation executed by a relay node.

Figs. 7A to 7C illustrate time slot allocation.

Figs. 8A to 8C are flow charts illustrating operations executed by the control node.

Figs. 9A to 9C illustrate a plurality of paths from the control node to a reception node.

Figs. 10A and 10B are communication quality tables.

Fig. 11 is a block diagram of functions of the control node.

Figs. 12A and 12B are communication quality tables.

### DESCRIPTION OF THE EMBODIMENTS

Various exemplary embodiments, features, and aspects of the invention will be described in detail below with reference to the drawings.

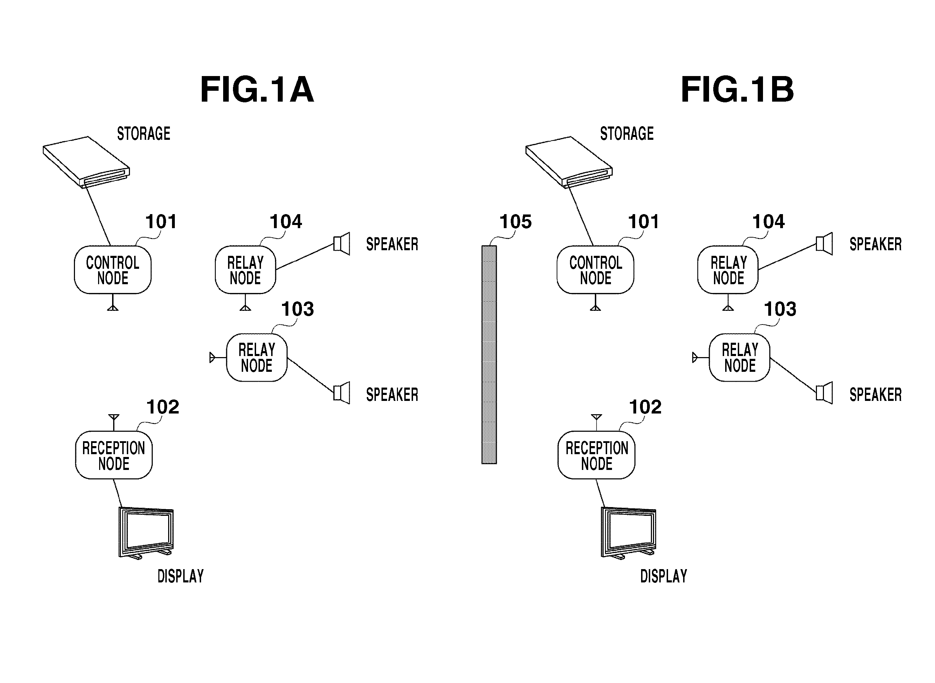

Fig. 1A illustrates a configuration of a wireless communication system according to a first exemplary embodiment. The communication system uses a relay transmission system for transmission/reception of audio or video data. A control node 101 is a control apparatus controlling the entire communication system. The control node 101 is connected to a storage means and operates as a transmission source apparatus transmitting video data such as moving images and audio data such as voices stored in the storage.

In this example, the video data includes data used by a reception node 102. Since the video data has a single destination in this case, the control node 101 transmits the video data via unicast transmission.

On the other hand, the audio data includes two types of data each used by relay nodes 103 and 104, respectively. Since the audio data has a plurality of destinations, the control node 101 transmits the audio data via broadcast transmission.

If the control node 101 were to transmit each of the two types of data included in the audio data to a respective one of the relay nodes 103 and 104 via unicast transmission, for each unicast transmission, the control node 101 would need to transmit a header including the same data (information about the transmission source, for example). However, by transmitting the audio data via broadcast transmission, the control node 101 does not need to transmit as many headers. Thus, communication efficiency can be improved. This advantageous effect becomes more significant when the audio data is transmitted to a greater number of destinations, such as to 5.1 or 7.1 channel audio systems.

The reception node 102 is a reception apparatus receiving the video data transmitted from the control node 101, and outputting the received video data to a display connected thereto. In addition, the reception node 102 outputs the received audio data to a speaker of the connected display.

In addition, the reception node 102 relays the audio data. However, since the control node 101 and the relay nodes 103 and 104 do not output the video data, the reception node 102 does not need to be able to relay the video data to other nodes 101, 103, and 104.

The relay nodes 103 and 104 are communication apparatuses relaying the received video data. The relay nodes 103 and 104 receive and output the audio data to speakers connected thereto.

In the present exemplary embodiment, the video data transmitted from the control node 101 has an effective period (i.e. a period during which it is useful). If the reception node 102 cannot receive the video data within this predetermined time, communication quality of the video data decreases, resulting in a decrease of the image quality on the display.

Similarly, the audio data has an effective period. If the relay node 103 or 104 cannot receive the audio data within a predetermined time, quality of the audio data output to the speaker decreases.

In the communication system, TDMA is used as an access protocol, and the timing of access to wireless media is managed in a fixed cycle based on a unit referred to as a superframe. Since the control node 101 transmits or relays data to the reception node 102 or to the relay node 103 or 104 within the superframes, each of these nodes can receive the data within a predetermined time or timing. This timing is obtained by time-dividing the superframe and may be a timing of a switch of an antenna radiation pattern based on the timing of a change of time slot allocated to each path link between nodes.

Further, since the reception node 102 and the relay nodes 103 and 104 receive data a plurality of times via a plurality of paths or path hops, and perform maximum likelihood decoding, reliability of the data (video data or audio data) can be assured. The maximum likelihood decoding is a method of acquiring data estimated to have the highest reception quality from among the data received via a plurality of paths.

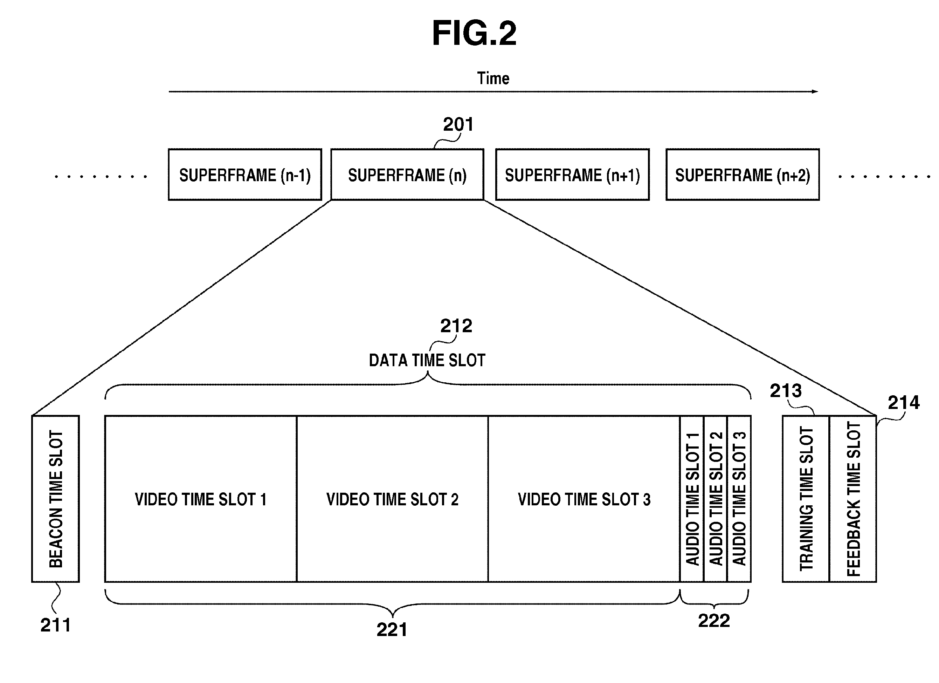

Fig. 2 illustrates a portion of a data stream comprising both audio and video data. The data steam is divided in a temporal direction into superframes, which are themselves divided into time slots (according to time division multiplexing protocol) allocated to audio data, video data and other information relevant to the processing of the data. Fig. 2 illustrates in particular a configuration of a superframe 201 used in the communication system. The superframe 201 includes a beacon time slot 211, a data time slot 212, a training time slot 213, and a feedback time slot 214. A "time slot" is a time-divided frame.

The beacon time slot 211 includes allocation information about each of the time slots 212 to 214. The control node 101 generates and broadcasts the allocation information about each of the time slots 212 to 214.

The data time slot 212 includes a plurality of video time slots 221 and a plurality of audio time slots 222. The video and audio time slots 221 and 222 are arranged to transmit the same video and audio data a plurality of times, respectively. In other words, the plurality of time slots containing each type of data (audio and video) may be identical to enable redundancy in the transmitted data.

Fig. 2 illustrates three time slots 1 to 3 as the video time slots 221. The training time slot 213 is used to measure node-to-node communication quality.

The feedback time slot 214 is used to notify the control node 101 of measurement results of the node-to-node communication quality measured with the training time slot 213.

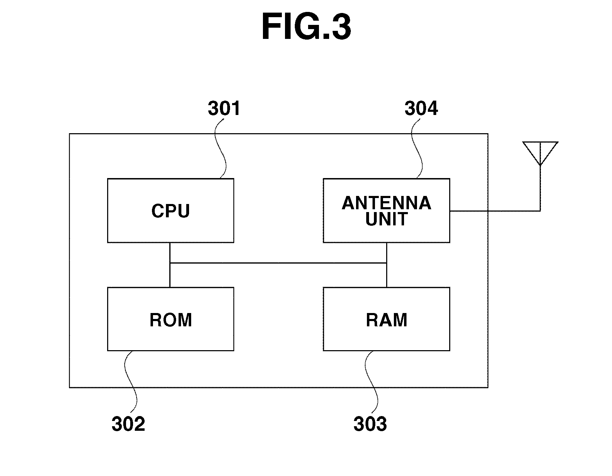

Fig. 3 is a block diagram illustrating a hardware configuration of the control node 101. Each of the nodes 102 to 104 preferably has the same hardware configuration for ease of implementation.

A central processing unit (CPU) 301 controls the control node 101. A read only memory (ROM) 302 stores programs and the like to execute operations of the flow charts described later. A random access memory (RAM) 303 functions as a working memory when the CPU 301 executes programs.

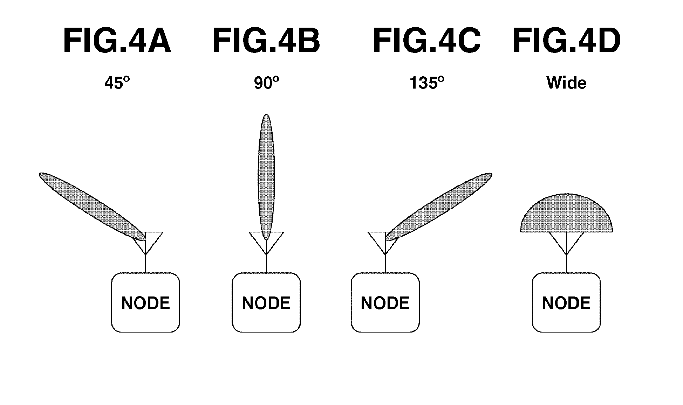

An antenna unit 304 includes an array antenna, and can switch a mode between a narrow radiation pattern mode (Narrow) and wide radiation pattern mode (Wide) . In the narrow radiation pattern mode, the antenna unit 304 decreases the radiation angle thereof to transmit/receive data at an orientation of 45°, 90°, and 135°, as illustrated in Figs. 4A to 4C respectively.

The CPU 301 can control the radiation pattern by causing a plurality of antenna elements of the antenna unit 304 to transmit radio waves of different phases and amplitudes. In the wide radiation pattern mode, the antenna unit 304 increases the pattern width to transmit/receive data in a range illustrated in Fig. 4D.

The control node 101 can transmit data to a wider area in the wide radiation pattern mode than in the narrow radiation pattern mode. However, if the transmission and reception apparatuses have a predetermined positional relationship, the narrow radiation pattern mode realizes higher reception quality, compared with the wide radiation pattern mode.

Alternatively, the antenna unit 304 may include a wide radiation pattern antenna and a plurality of narrow radiation pattern antennas having different radiation patterns. In this way, by switching the antenna used, the antenna unit 304 can switch between the narrow radiation pattern mode and the wide radiation pattern mode. Alternatively, the antenna unit 304 may control the orientation/radiation pattern by switching between a plurality of narrow radiation pattern antennas having different orientations/radiation patterns.

In the first exemplary embodiment, the control node 101 transmits audio data having a small amount of data to a plurality of destinations in the wide radiation pattern mode via broadcast transmission (a first transmission method). In this way, when the control node 101 transmits data to a plurality of destinations, antenna control and timing control can be simplified, resulting in a reduction of processing load.

On the other hand, the control node 101 transmits video data having a large amount of data to a single destination in the narrow radiation pattern mode via unicast transmission (a second transmission method). By switching between these transmission methods depending on the type of data in the above way, the control node 101 can use a transmission method suitable for the data. Thus, data reception quality is improved.

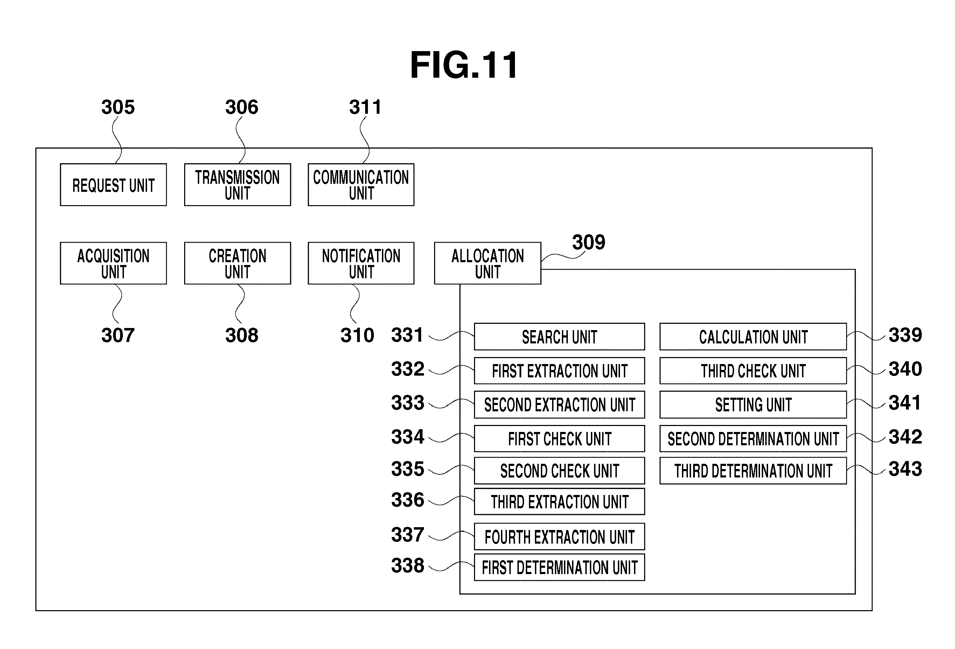

Fig. 11 is a block diagram illustrating functions of the CPU 301. The CPU 301 executes these functions by reading programs stored in the ROM 302.

A request unit 305 requests all the nodes to transmit a training signal, which is a known signal, to measure node-to-node communication quality. A transmission unit 306 sequentially switches orientations of the antenna unit 304 to transmit a training signal.

An acquisition unit 307 acquires information about the measured node-to-node communication quality (communication quality information). A creation unit 308 creates a communication quality table based on the communication quality information acquired by the acquisition unit 307. An allocation unit 309 allocates nodes and orientations of the antenna unit 304 to the audio and video time slots.

The allocation unit 309 further includes the following units. A search unit 331 searches for paths in which the control node 101 used as the transmission node can transmit video data to the reception node 102 with a predetermined number of time slots. In this example, the predetermined number is less than or equal to the number of available video time slots (3 available time slots in the example illustrated in Fig. 2).

A first extraction unit 332 extracts combinations of narrow radiation patterns of the antenna unit 304, each combination exhibiting link communication quality equal to or greater than a threshold. By "link", what is meant is a communication path in which nodes directly communicate with each other (in a "line of sight" path) without an intermediate relay. If there is one intermediate relay, there are two path hops and therefore two links.

For example, when the control node 101 transmits data to the reception node 102 via the relay node 103, the communication path between the control node 101 and the relay node 103 and the communication path between the relay node 103 and the reception node 102 are both referred to as links.

Further, in each link, a node transmitting data is referred to as a link transmission node, and a node receiving the data is referred to as a link reception node. For example, in the case of the link between the relay node 103 and the reception node 102, the relay node 103 is the link transmission node, and the reception node 102 is the link reception node.

From the paths found by the search unit 331, a second extraction unit 333 extracts paths, all links thereof exhibiting communication quality equal to or greater than a threshold. A first check unit 334 checks whether there is any path that has not been set yet by a setting unit 341. A second check unit 335 checks whether there is any available video time slot to which no link transmission node has been allocated.

A third extraction unit 336 extracts the paths with the lowest number of hops (or links between nodes), from the paths extracted by the second extraction unit 333. The number of hops in this case represents the number of (extra) nodes through which data passes as it is transmitted from the control node 101 to the reception node 102.

For example, if the control node 101 transmits data to the reception node 102 via one relay node 103, the number of hops is 1. If the control node 101 transmits data to the reception node 102 directly, the number of hops is 0 (though the number of "links" is 1).

A fourth extraction unit 337 extracts a path (a "candidate path") with the highest communication quality, from the paths extracted by the third extraction unit 336. A first determination unit 338 determines whether the link transmission node of the path extracted by the fourth extraction unit 337 is the same as any of the link transmission nodes of the paths that have already been set by the setting unit 341. In other words, the first determination unit 338 determines whether a common link transmission node exists. The link transmission node can be the source node (e.g. the control node) or a relay node that acts as a link transmission node for a subsequent link in a path.

A calculation unit 339 calculates the number of time slots required by the path extracted by the fourth extraction unit 337, based on the number of hops of the path. For example, each hop may require a further video time slot so that a path with 3 hops (4 links) may be too long for a data stream with only 3 time slots allocated to video. A third check unit 340 checks whether the number of available video time slots is equal to or greater than the number of time slots calculated by the calculation unit 339.

The setting unit 341 sets the path extracted by the third extraction unit 336. The setting unit 341 sets the link transmission node and the link reception node of each link of the path in the available video time slots. Information about the video time slots set by the setting unit 341 is referred to as setting information.

A second determination unit 342 determines whether a link reception node of the path extracted by the fourth extraction unit 337 is the same as the link reception node of the path already set by the setting unit 341, that extracted path having the transmission link node already determined as common by the first determination unit. A third determination unit 343 determines whether the control node 101 can use an identical time slot to transmit data to different link reception nodes with quality equal to or greater than a threshold.

A notification unit 310 notifies all the nodes of the setting information about the time slots allocated by the allocation unit 309. A communication unit 311 performs wireless communication with other nodes via the antenna unit 304.

Part of or all of these function blocks (e.g. request unit 305, transmission unit 306, communication unit 311, etc.) may be configured as a single function block. Alternatively, part of or all of these function blocks may be configured as hardware, such as an application specific integrated circuit (ASIC).

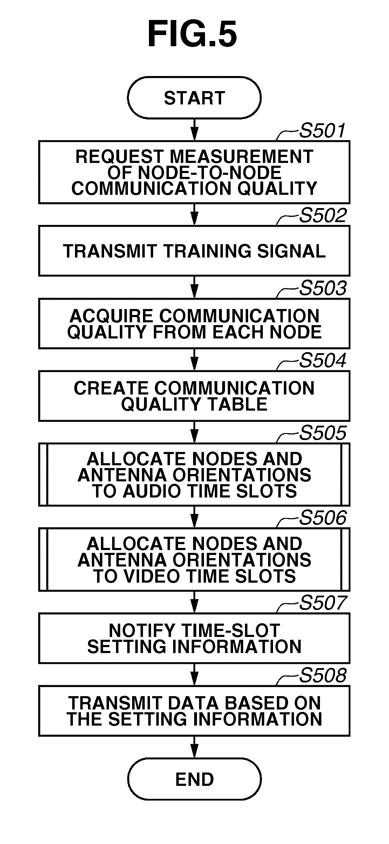

Fig. 5 is a flow chart illustrating an operation executed by the CPU 301 of the control node 101. The CPU 301 reads various programs stored in the ROM 302 to execute the operation. The following operation will be described assuming that the CPU 301 has already recognized that the nodes 101 to 104 form a wireless communication system.

In the present exemplary embodiment, the ROM 302 stores information that the nodes 101 to 104 form a wireless communication system, and the CPU 301 reads the information from the ROM 302 to recognize the information. Alternatively, the CPU 301 may search the surrounding environment to recognize nodes forming a wireless communication system.

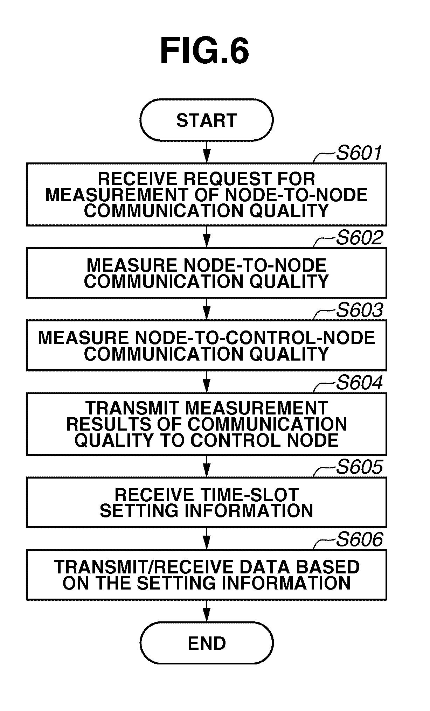

Fig. 6 is a flow chart illustrating an operation executed by the CPU of each of the relay nodes 102 to 104. Each of the CPUs reads programs stored in a respective ROM.

First, in step S501, the CPU 301 instructs the request unit 305 to request each of the nodes to measure node-to-node communication quality at each orientation. The request unit 305 transmits the request via broadcast transmission.

The request unit 305 transmits a training signal, which is a known signal, to request the nodes 102 to 104 to measure a received signal strength indication (RSSI) as the communication quality. Alternatively, the nodes 102 to 104 may measure a signal-to-noise ratio (SNR), a carrier to interference and noise ratio (CINR), or the like, as the communication quality.

In step S601, the antenna unit of each of the nodes 102 to 104 receives the request transmitted from the control node 101 in step S501. In step S602, the CPU 301 instructs the antenna unit of each of the nodes 102 to 104 to sequentially change the antenna radiation pattern (including the orientation) thereof to 45°, 90°, 135°, and Wide to transmit a training signal.

In addition, each of the nodes 102 to 104 sequentially changes the antenna orientation thereof to 45°, 90°, 135°, and Wide to receive a training signal. In this way, each node measures node-to-node communication quality (RSSI in this example) at each antenna orientation.

Next, in step S502, the CPU 301 instructs the transmission unit 306 to sequentially change the radiation pattern (optionally including the orientation) of the antenna unit 304 and transmit a training signal. In this example, the control node 101 sequentially changes the radiation pattern of the antenna unit 304 to 45°, 90°, 135°, and Wide to transmit the training signal.

In step S603, the CPU 301 instructs the antenna unit of each of the nodes 102 to 104 to receive the training signal transmitted from the control node 101 in step S502 and to measure communication quality. In this example, each of the nodes 102 to 104 sequentially changes the radiation pattern of the antenna unit to 45°, 90°, 135°, and Wide to receive the training signal and measure the RSSI.

In step S604, the CPU 301 instructs the antenna unit of each of the nodes 102 to 104 to transmit results of the communication quality measured in steps S602 and S603 to the control node 101. Alternatively, a node may relay and transfer information about the communication quality acquired from other nodes to the control node 101.

For example, the nodes 102 and 104 may measure information about the RSSI and broadcast the information. In addition, the node 103 may receive the information, add information about the RSSI measured by the node 103 to the received information, and broadcast the information to the control node 101 to inform it of the RSSI information.

Next, in step S503, the CPU 301 instructs the acquisition unit 307 to acquire results of the communication quality transmitted in step S604 from each of the nodes 102 to 104. In this example, the acquisition unit 307 acquires the RSSI levels measured by the nodes 102 to 104 therefrom.

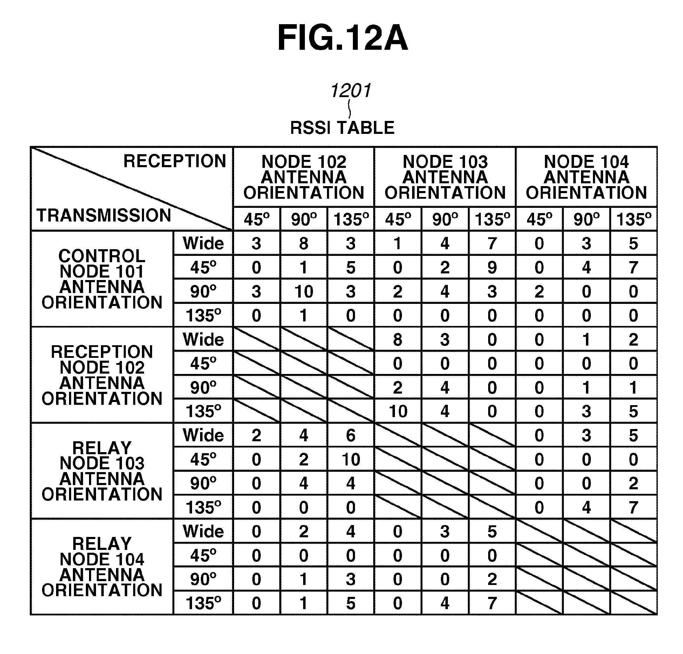

Next, in step S504, the CPU 301 instructs the creation unit 308 to create a communication quality table based on the communication quality acquired in step S503. In this example, the creation unit 308 creates an RSSI table 1201 illustrated in Fig. 12A. The RSSI table 1201 includes RSSI levels 0 to 10, and a higher RSSI level represents higher communication quality.

Next, in step S505, the CPU 301 instructs the allocation unit 309 to allocate a link transmission node and link reception nodes in each of the audio time slots (each of the audio time slots has a plurality of destinations).

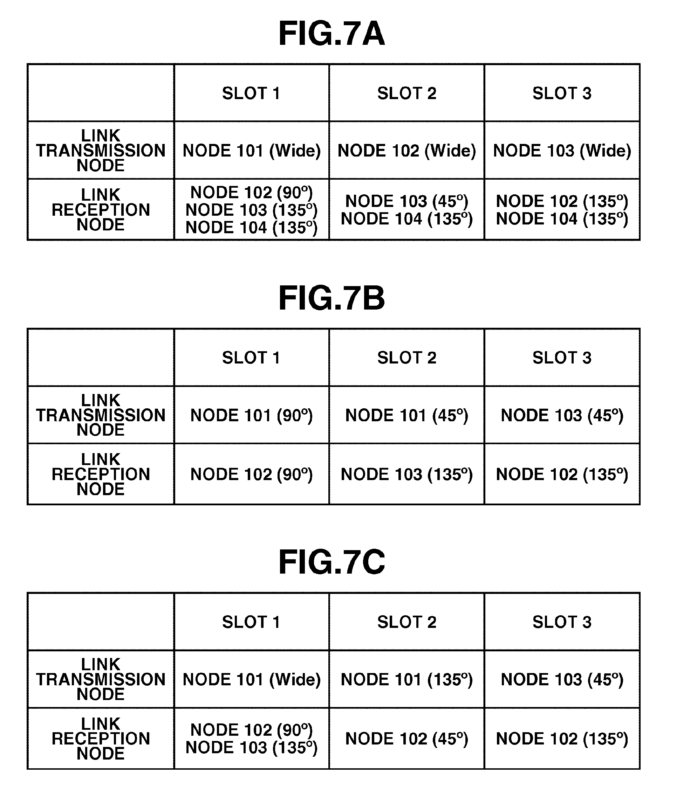

A flow chart (first allocation method) illustrating an operation of allocating nodes to the audio time slots will be described later. In this example, the allocation unit 309 allocates nodes to the audio time slots as illustrated in Fig. 7A. In parentheses of Fig. 7A, antenna radiation patterns are indicated.

Next, in step S506, the CPU 301 instructs the allocation unit 309 to allocate a link transmission node, a link reception node, and antenna orientations at which the nodes transmit/receive data to each of the video time slots (each of the video time slots having a single destination).

A flow chart (showing a second allocation method) illustrating an operation of allocating nodes and antenna orientations to the video time slots will be described later. In this example, the allocation unit 309 allocates nodes to the video time slots as illustrated in Fig. 7B. Thus, different allocation methods are used depending on the number of data destinations, as well as to the type of data.

Next, in step S507, the CPU 301 instructs the notification unit 310 to notify all the nodes of setting information by using the beacon time slot 211. The setting information represents nodes and antenna radiation patterns allocated to each of the time slots in steps S505 and S506. In this example, the notification unit 310 notifies the nodes 102 to 104 of the setting information in each of the time slots 1 to 3 illustrated in Figs. 7A and 7B.

Alternatively, the notification unit 310 may notify only the nodes in the paths that need the setting information (at least the nodes receiving data) of the setting information. Namely, the notification unit 310 may notify only the nodes 102 and 103 of the setting information. In this way, the communication amount can be reduced.

Alternatively, the notification unit 310 may notify the nodes that do not need the setting information of the non-necessity of the setting information. Further alternatively, the notification unit 310 may notify only the relevant nodes of the setting information relevant thereto.

For example, the notification unit 310 may notify the node 103 that the node 103 needs to use slot 2 to receive data at an antenna orientation of 135° and slot 3 to transmit data at an antenna orientation of 45°. In this way, the communication amount can be reduced.

In step S605, the CPU instructs the antenna unit of each of the nodes 102 to 104 to receive the setting information notified from the control node 101 in step S507.

Next, in step S508, the CPU 301 instructs the communication unit 311 to transmit data via the antenna unit 304 based on the setting information. Further, each of the nodes 102 to 104 transmits/receives data based on the received time-slot setting information.

Next, in step S606, the CPU instructs the antenna unit of each of the nodes 102 to 104 to transmit/receive data based on the setting information received in step S605.

In this way, based on the setting information in the time slots, all the nodes in the communication system transmit/receive data.

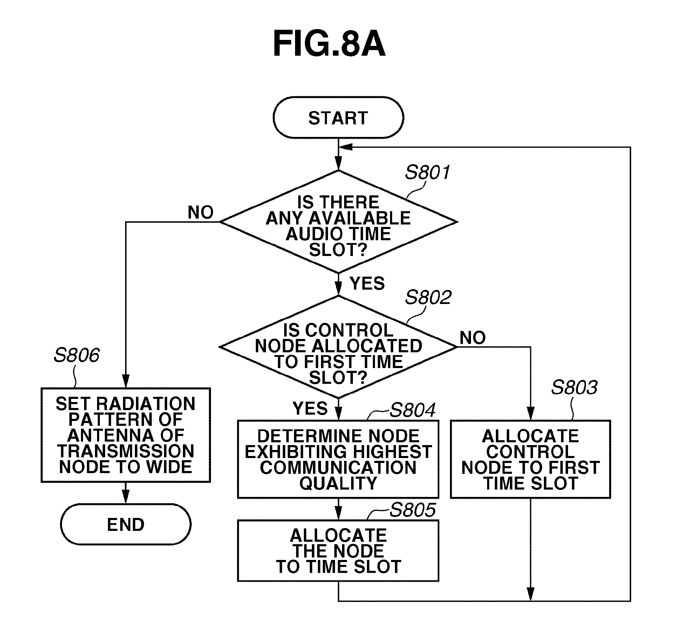

Fig. 8A is a flow chart illustrating an operation of allocating nodes to the audio time slots. The CPU 301 executes the operation by reading programs stored in the ROM 302. This flow chart is used in the above step S505.

First, in step S801, the CPU 301 instructs the allocation unit 309 to check whether there is any available audio time slot. If there is an available audio time slot (YES in step S801), the processing proceeds to step S802. If not (NO in step S801), the processing proceeds to step S806. In this example, since there are three available audio time slots, the processing proceeds to step S802.

In step S802, the CPU 301 instructs the allocation unit 309 to check whether the control node 101 is allocated to the first time slot of the audio time slots as a link transmission node. If the control node 101 is allocated to the first audio time slot (YES in step S802), the processing proceeds to step S804. If not (NO in step S802), the processing proceeds to step S803.

In step S803, the CPU 301 instructs the allocation unit 309 to allocate the control node 101 to the first audio time slot as a transmission node.

In this way, the control node 101, which has audio data to transmit, can use the first time slot to transmit the audio data. After the allocation, the processing returns to step S801.

In step S804, the CPU 301 instructs the allocation unit 309 to determine a node exhibiting the highest communication quality when the control node 101 transmits data with a Wide radiation pattern, among the nodes that are not allocated in the audio time slot as the link transmission node. In this example, the allocation unit 309 refers to the RSSI table 601 and determines that the node 102 exhibits the highest communication quality.

Next, in step S805, the CPU 301 instructs the allocation unit 309 to allocate the node determined in step S804 in the first available audio time slot as a link transmission node. After the allocation, the processing returns to step S801. In this example, the allocation unit 309 allocates the node 102 as a link transmission node in the second time slot.

The above steps S801 to S805 are repeated, and as a result, the allocation unit 309 allocates the node 103 in the third time slot as a link transmission node. If there is no available audio time slot (NO in step S801), the processing proceeds to step S806.

In step S806, the CPU 301 instructs the allocation unit 309 to set the antenna radiation pattern of each of the link transmission nodes in the audio time slots to Wide. Further, depending on the transmission node, the allocation unit 309 sets the antenna orientation of each of the data reception nodes to an appropriate angle to obtain the highest reception quality.

For example, the allocation unit 309 refers to the RSSI table 601, and since the control node 101 is allocated to the first time slot, the allocation unit 309 determines that the node 102, and the nodes 103 and 104 receive data at antenna orientations of 90° and 135°, respectively.

In this way, when receiving data, each of the data reception apparatuses uses an antenna radiation pattern/orientation exhibiting the highest communication quality, depending on a respective transmission node specified in a respective time slot. As a result, data reception quality is improved.

Further, since the relay nodes 103 and 104 can receive identical audio data a plurality of times, the relay nodes 103 and 104 can receive reliable audio data. After step S806, the CPU 301 ends the flow chart of Fig. 8A.

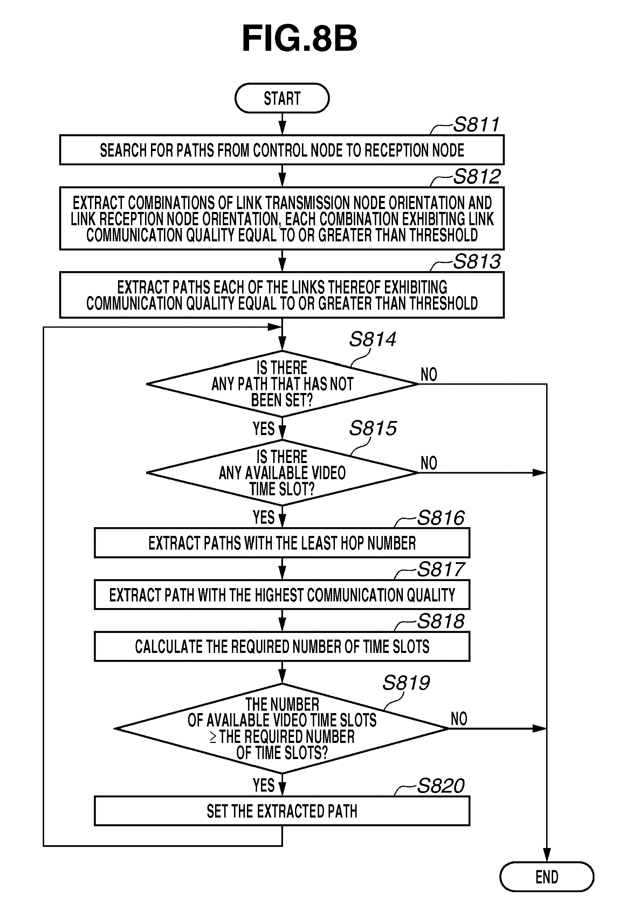

Fig. 8B is a flow chart illustrating an operation of allocating video data to the video time slots. The CPU 301 executes the operation by reading programs stored in the ROM 302. This flow chart is used in the above step S506.

First, in step S811, the CPU 301 instructs the search unit 331 to search for paths in which the control node 101 used as a transmission node can transmit video data to the reception node 102 with a predetermined number of time slots. In this example, the number of video time slots allocated in a single superframe is 3.

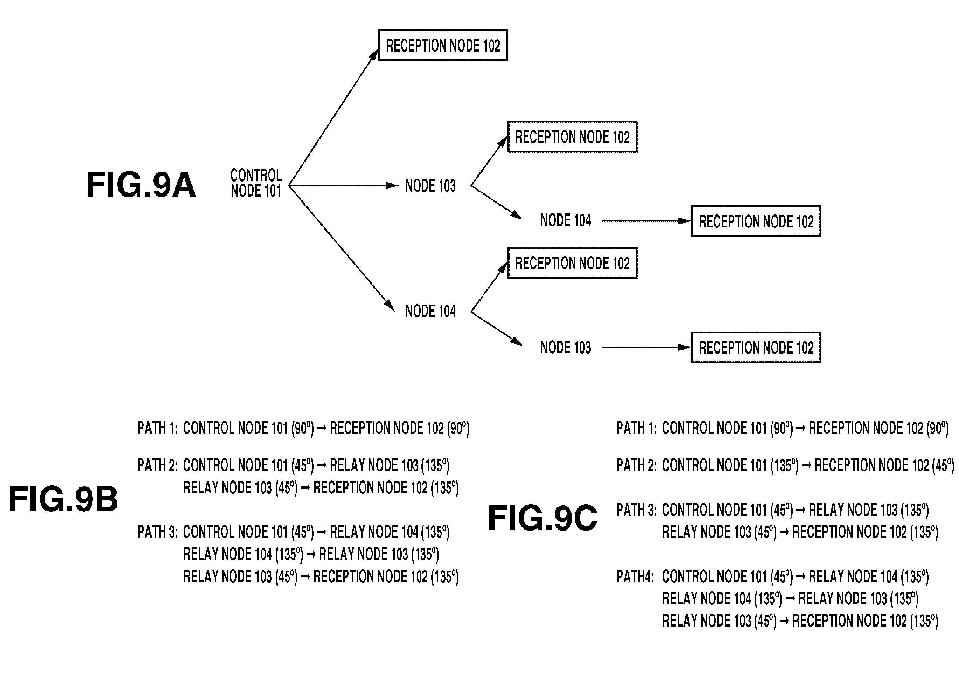

In this example, the search unit 331 searches for paths in which the control node 101 transmits data to the reception node 102 within three time slots (the predetermined number is 3, in this example). As a result, the search unit 331 obtains search results (of all available paths) as illustrated in Fig. 9A.

In Fig. 9A, the path "control node 101 → node 103 → reception node 102" indicates that the control node 101 transmits video data to the reception node 102 via the node 103. A plurality of paths obtained in step S811 will be hereinafter referred to as a first path group, all of which are shown in Fig. 9A.

In step S811, instead of causing the search unit 331 to search for the first path group, for example, a user may input the first path group or the control node 101 may read the first path group from a recording medium (not illustrated), so that the CPU 301 may recognize the first path group.

In step S812, the CPU 301 instructs the first extraction unit 332 to refer to the communication quality table and extract combinations of narrow antenna orientations, each combination exhibiting link communication quality equal to or greater than a threshold. The link communication quality is communication quality (i.e. the reliability with which data is transmitted) between a link transmission node and a link reception node.

In this example, the extraction unit 332 refers to the RSSI table 601 and extracts combinations of antenna radiation patterns, each exhibiting RSSI level 7 or greater. RSSI level 7 is the threshold for the communication quality that assures communication between nodes.

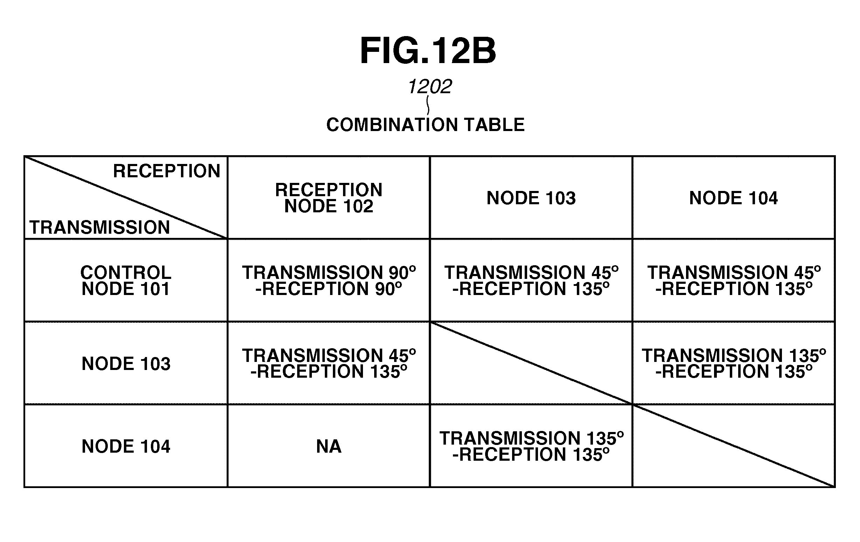

Since the reception node 102 does not transmit video data, the reception node 102 is not included as a transmission node in Fig. 12B. Fig. 12B is a combination table 1202 representing extraction results. Each pair of nodes forms a communication path to communicate directly with each other by using such extracted antenna radiation patterns.

In step S813, the CPU 301 instructs the second extraction unit 333 to refer to a combination table 602 and extract (select), from the first path group, paths each of the communication paths thereof exhibiting communication quality equal to or greater than a threshold (RSSI level 7 or greater in this example).

For example, the RSSI between the control node 101 (antenna orientation 45°) and the relay node 103 (antenna orientation 135°) is 7 or greater. The RSSI between the relay node 103 (antenna orientation 45°) and the reception node 102 (antenna orientation 135°) is also 7 or greater.

Thus, the extraction unit 332 extracts the path including the communication path "control node 101 (antenna orientation 45°) → relay node 103 (antenna orientation 135°) and the communication path "relay node 103 (antenna orientation 45°) → reception node 102 (antenna orientation 135°)".

As a result, the extraction unit 332 extracts three paths illustrated in Fig. 9B. The paths extracted in step S813 will be hereinafter referred to as a second path group. Namely, the RSSI between arbitrary communication apparatuses of any path of the second path group is 7 or greater.

In step S814, the CPU 301 instructs the first check unit 334 to check whether there is a path that has not been set in step S820 to be described below in the second path group. If there is a path that has not been set yet (YES in step S814), the processing proceeds to step S815. If not, that is, if all the paths have been set (NO in step S814), the CPU 301 ends the flow chart of Fig. 8B.

In this example, since paths 1 to 3 have not been set (YES in step S814), the processing proceeds to step S815. In step S815, the CPU 301 instructs the second check unit 335 to check whether there is an available video time slot.

If there is an available video time slot (YES in step S815), the processing proceeds to step S816. If not (NO in step S815), the CPU 301 ends the flow chart of Fig. 8B.

In this example, since there are three available video time slots (YES in step S815), the processing proceeds to step S816. In step S816, the CPU 301 instructs the third extraction unit 336 to extract paths with the lowest number of hops from the paths that have not been set in step S820 in the second path group.

In this example, since the number of hops in path 1 is 0, the third extraction unit 336 extracts path 1. The paths extracted in step S816 are referred to as a third path group. By extracting paths having the least hop number, as many paths as possible can be set in a limited number of time slots.

Alternatively, paths may be extracted depending on node locations. By extracting paths depending on node locations, for example, it becomes possible to prevent the extraction of paths that go through crowded nodes.

In step S817, the CPU 301 instructs the fourth extraction unit 337 to extract a path with the highest communication quality (the highest RSSI value in this example) from the third path group. If the third path group includes a plurality of paths each formed by a plurality of communication paths, the fourth extraction unit 337 extracts a path having the highest sum of the RSSI values of the individual communication paths.

Alternatively, if the third path group includes a plurality of paths, the minimum RSSI values of the communication paths of the paths may be compared, and a path having the highest minimum RSSI value may be extracted. In this example, the fourth extraction unit 337 extracts path 1. The path extracted in step S817 is referred to as a candidate path.

If the third extraction unit 336 extracts only a single path in step S816, the control node 101 may skip step S817. In this way, processing load of the control node 101 can be reduced.

Next, in step S818, the CPU 301 instructs the calculation unit 339 to calculate the number of time slots required by the candidate path to be the hop number + 1. In this example, since the fourth extraction unit 337 extracts path 1 and the hop number thereof is 0, the calculation unit 339 calculates the required number of time slots to be 1 (since each link lasts one time slot).

Next, in step S819, the CPU 301 instructs the third check unit 340 to check whether the number of available video time slots is equal to or greater than the required number of time slots calculated in step S818. If the third check unit 340 determines that there are a number of available video time slots equal to or greater than the calculated number thereof (YES in step S819), the processing proceeds to step S820, and if not (NO in step S819), the CPU 301 ends the operation of the flow chart of Fig. 8B.

In this case, since the number of time slots required by path 1 is 1 and there are three available video time slots, the third check unit 340 confirms that the number of available video time slots is equal to or greater than the calculated number of time slots (YES in step S819). Thus, the processing proceeds to step S820.

In step S820, the CPU 301 instructs the setting unit 341 to set the link transmission node and the link reception node of the communication path constituting the candidate path in an available video time slot.

In this example, the setting unit 341 sets the control node 101 (90°) and the node 102 (90°) in slot 1 as the link transmission node and the link reception node, respectively. Next, the processing returns to step S814. Values in the above parentheses represent antenna radiation patterns/orientations at which the nodes 101 and 102 transmit/receive data in the respective time slots.

Next, in step S814, the first check unit 334 confirms that paths 2 and 3 have not been set (YES in step S814), and the processing proceeds tostepS815. In step S815, the second check unit 335 confirms that there are two available video time slots (YES in step S815), and the processing proceeds to step S816.

In step S816, since the hop number of path 2 is 1, the third extraction unit 336 extracts path 2. In this step, since path 1 has already been set, the third extraction unit 336 does not extract path 1. Next, in step S817, since path 2 has the highest communication quality (the RSSI value in this example), the fourth extraction unit 337 extracts path 2.

In step S818, since the hop number of path 2 is 1, the calculation unit 339 calculates the required number of time slots to be 2. Next, in step S819, the third check unit 340 checks whether the number of available video time slots is equal to or greater than the required number of time slots, i.e., "2".

In step S820, the setting unit 341 sets the control node 101 (45°) and the relay node 103 (135°) in slot 2 as the link transmission node and the link reception node, respectively. In addition, the setting unit 341 sets the relay node 103 (45°) and the reception node 102 (135°) in slot 3 as the link transmission node and the link reception node, respectively. Next, the processing returns to step S814.

In step S814, the first check unit 334 confirms that path 3 has not been set yet (YES in step S814), and the processing proceeds to step S815. In step S815, the second check unit 335 confirms that there is no available video time slot (NO in step S815), and the CPU 301 ends the flow chart of Fig. 8B.

In this way, the CPU 301 determines allocation of time slots as illustrated in Fig. 7B.

In accordance with such time slot allocation determined in the above way, each of the nodes transmits data. Namely, based on video time slot 1, the control node 101 sets the antenna orientation to 90° to transmit data to the reception node 102, and the reception node 102 sets the antenna orientation to 90° to receive the data.

Further, in video time slot 2, the control node 101 changes the antenna orientation to 45° to transmit the same data to the relay node 103, and the relay node 103 sets the antenna orientation to 135° to receive the data.

Furthermore, in video time slot 3, the relay node 103 changes the antenna orientation to 45° to transmit the same data to the reception node 102, and the reception node 102 changes the antenna orientation to 135° to receive the data.

In this way, to transmit/receive data, based on the node-to-node communication quality measured per antenna radiation pattern/orientation, a data transmission apparatus, a data reception apparatus, and the antenna radiation patterns/orientations of these apparatuses are determined for each time slot. Thus, data reception quality can be improved.

In addition, since the reception node 102 can receive the same video data a plurality of times, the reception node 102 can receive reliable video data.

Thus, the CPU 301 uses a first allocation method (Fig. 8B) for video data having a single destination (e.g. a screen) and a second allocation method (Fig. 8B) for audio data having a plurality of destinations (e.g. a plurality of speakers).

As described above, since the CPU 301 uses different allocation methods depending on the number of data destinations, the communication quality of data that has a single destination address and is sent via unicast transmission can be improved. In addition, since the CPU 301 broadcasts data having a plurality of destinations, processing load of the CPU 301 can be reduced.

In the above example, the control node 101 allocates communication apparatuses and antenna radiation patterns for each time slot and notifies all the nodes of the setting information. However, alternatively, each of the nodes may use an identical algorithm to allocate link communication apparatuses and antenna radiation patterns thereof for each time slot. In this way, the control node 101 does not need to notify all the nodes of the setting information.

Further, alternatively, the reception node 102, or the relay node 103 or 104 may function as a control node. Alternatively, another node (not illustrated) arranged for control may function as a control node.

In addition, in the above example, a data transmission apparatus, a data reception apparatus, and antenna orientations of these apparatuses are determined for each time slot, based on the node-to-node communication quality measured per antenna radiation pattern.

However, the present invention is not limited to such example. The user may previously set antenna radiation patterns for each combination of data transmission and reception apparatuses. Each combination of the data transmission and reception apparatuses set based on the node-to-node communication quality may perform communication by using the previously set antenna radiation patterns.

In this way, without measuring communication quality for each antenna radiation pattern, the antenna radiation patterns can nevertheless be set.

In a second exemplary embodiment, the CPU 301 changes transmission angles of link transmission nodes to allocate more paths for available time slots, compared with those of the first exemplary embodiment. Fig. 1B illustrates a system configuration according to the second exemplary embodiment. Since the nodes 101 to 104 of the second exemplary embodiment are the same as those of the first exemplary embodiment, repetitive description thereof will be omitted. A reflection wall 105 reflects radio waves, which may contain audio and/or video data streams.

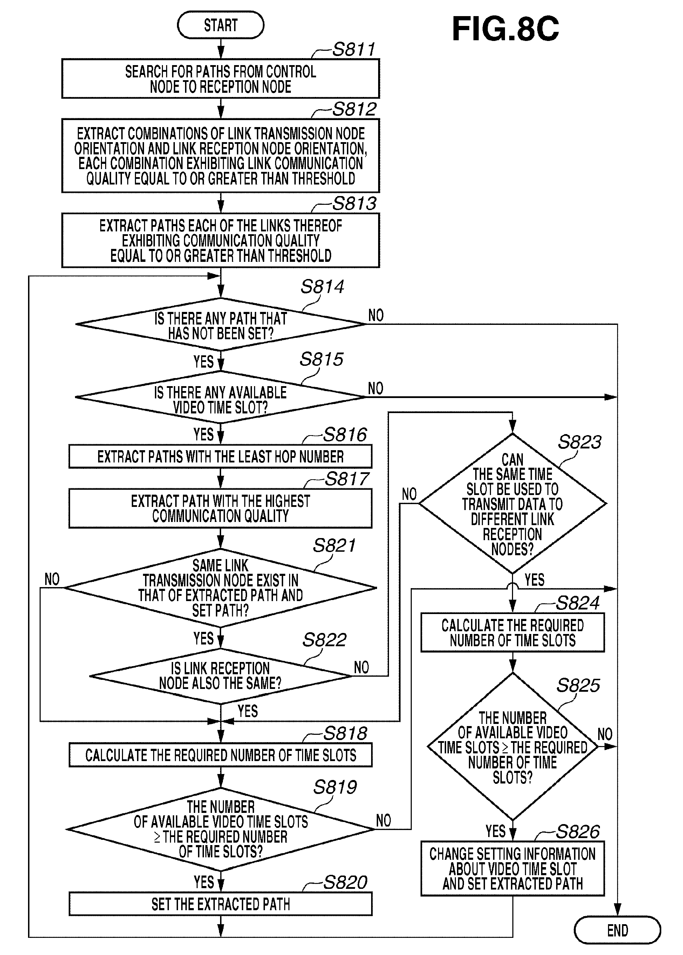

The configuration of the superframes and the internal configuration of the control node 101 of the second exemplary embodiment are the same as those of the first exemplary embodiment. Thus, identical elements are denoted by identical reference characters, and repetitive description thereof will be omitted. Further, the control node 101 executes the operation illustrate by the flow chart of Fig. 8B used in step S506 of Fig. 5 in the first exemplary embodiment. However, instead of Fig. 8B, the control node 101 executes the operation illustrated by the flow chart of Fig. 8C in the second exemplary embodiment. Since other operations are the same as those of the first exemplary embodiment, identical operations are denoted by identical reference characters, and repetitive description thereof will be omitted.

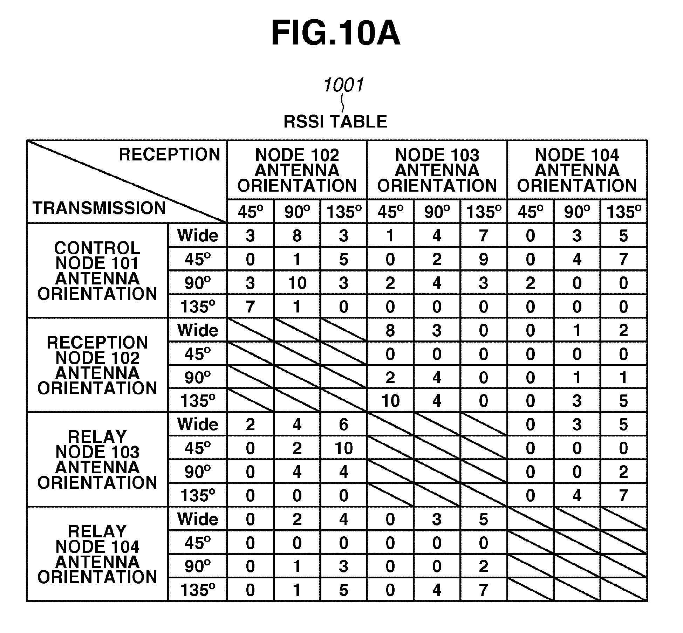

The second exemplary embodiment will be described, assuming that an RSSI table 1001 in Fig. 10A has already been created in step S504 of Fig. 5.

In the second exemplary embodiment, when the control node 101 transmits data at an antenna orientation of 135° and the reception node 102 receives the data at an antenna orientation of 45°, because of the reflection wall 105, the reception quality at the antenna orientations is increased from that in the first exemplary embodiment.

Hereinafter, the operation illustrated by the flow chart of Fig. 8C will be described. First, in step S811, the CPU 301 instructs the search unit 331 to search for paths in which the control node 101 used as a transmission node can transmit video data to the reception node 102 with a predetermined number of time slots. As a result, the search unit 331 obtains search results as illustrated in Fig. 9A.

In step S812, the CPU 301 instructs the first extraction unit 332 to refer to a communication quality table, and extract combinations of narrow antenna radiation patterns each exhibiting link communication quality equal to or greater than a threshold. In this example, the extraction unit 332 refers to the RSSI table 1001 and extracts combinations of antenna orientations each exhibiting RSSI level 7 or greater.

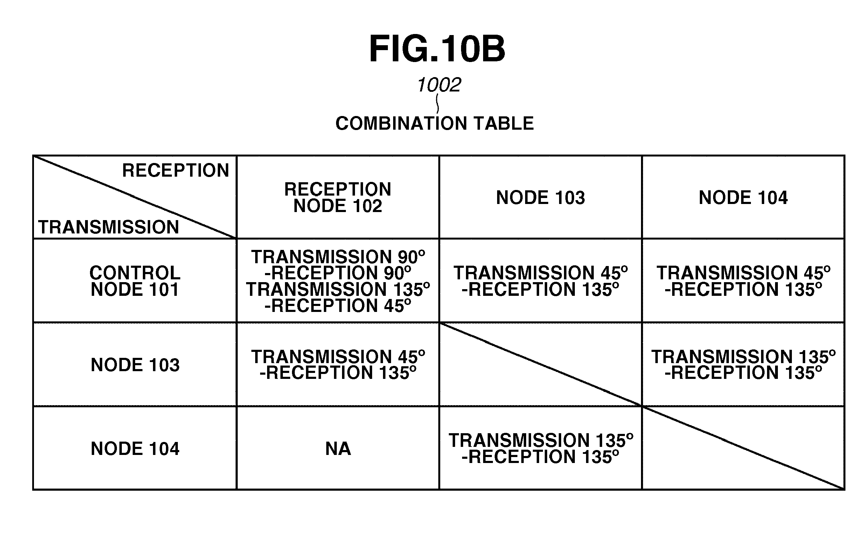

Fig. 10B is a combination table 1002 representing extraction results. Each pair of nodes forms a communication path to communicate directly with each other by using such extracted antenna radiation patterns.

In step S813, the CPU 301 instructs the second extraction unit 333 to refer to the combination table 1002 and extract, from the first path group, paths each of the communication paths thereof exhibiting communication quality level equal to or greater than a threshold (the RSSI is 7 or greater in this example).

Referring to Fig. 10B, in the case of data transmission from the control node 101 to the reception node 102, two pairs of antenna radiation patterns exhibit RSSI level 7 or greater. In such a case, communication paths having different antenna radiation pattern combinations are treated as different communication paths. Namely, if paths are formed by different communication path hops, the second extraction unit 333 extracts these paths as different paths. In this example, as a result, the second extraction unit 333 extracts four paths illustrated in Fig. 9C.

Next, in step S814, the first check unit 334 confirms that paths 1 to 4 have not been set yet (YES in step S814), and the processing proceeds to step S815. In step S815, the second check unit 335 confirms that there are three available video time slots (YES in step S815), and the processing proceeds to step S816. Note that in this embodiment, there are more paths than there are time slots available.

In step S816, the third extraction unit 336 extracts paths 1 and 2 with the hop number 0. In step S817, since the RSSI level of path 1 is 8 and the RSSI level of path 2 is 7, the fourth extraction unit 337 extracts path 1 as a candidate path.

In step S821, the CPU 301 instructs the first determination unit 338 to execute the following processing. Namely, the first determination unit 338 determines whether the link transmission node of the candidate path has a common link transmission node of the path set in step S820.

If the common link transmission node exists (YES in step S821), the processing proceeds to step S822. If not (NO in step S821), the processing proceeds to step S818. In this example, since there is no path set in step S820 yet, the first determination unit 338 determines that the common link transmission node does not exist (NO in step S822), and the processing proceeds to step S818.

In step S818, since the hop number of path 1 is 0, the calculation unit 339 calculates the required number of time slots to be 1. In step S819, the third check unit 340 confirms that the number of available video time slots, which is 3 in this example, is equal to or greater than the required number of time slots, which is 1 in this example (YES in step S819).

In step S820, the setting unit 341 sets the control node 101 (90°) and the node 102 (90°) as the link transmission node and as the link reception node in slot 1, respectively. Then, the processing returns to step S814.

Next, in step S814, the first check unit 334 confirms that paths 2 to 4 have not been set (YES in step S814), and the processing proceeds to step S815. In step S815, the second check unit 335 confirms that there are two available video time slots (YES in step S815), and the processing proceeds to step S816.

In step S816, the third extraction unit 336 extracts path 2 with the hop number 1. In this step, since path 1 has already been set, the third extraction unit 336 does not extract path 1. In step S817, the fourth extraction unit 337 extracts path 2 as a candidate path.

In step S821, the first determination unit 338 determines whether the link transmission node constituting path 2 has the common link transmission node constituting path 1. In this example, both path 1 and path 2 include the control node 101 as the link transmission node (YES in step S821), the processing proceeds to step S822.

In step S822, the CPU 301 instructs the second determination unit 342 to determine whether the link reception node corresponding to the common link transmission node is the same node. If it is the same node (YES in step S822), the processing proceeds to step S818. If not (NO in step S822), the processing proceeds to step S823.

In this example, both in paths 1 and 2, the control node 101 transmits data to the reception node 102. Thus, the second determination unit 342 determines that the same link reception node is used in both paths 1 and 2 (YES in step S822), and the processing proceeds to step S818. The relevance of determining whether the transmission node and the reception node are the same in different paths is that some transmission (e.g. some links) may be used for different paths in the same time slot, thus increasing the number of paths that may be used within the same number of time slots.

In step S818, since the hop number of path 2 is 0, the calculation unit 339 calculates the required number of time slots to be 1. In step S819, the third check unit 340 confirms that the number of available video time slots, which is 2 in this example, is equal to or greater than the required number of time slots, which is 1 in this example (YES in step S819).

In step S820, the setting unit 341 sets the control node 101 (135°) and the node 102 (45°) as the link transmission node and the link reception node in slot 2, respectively. Next, the processing returns to step S814.

Next, in step S814, the first check unit 334 confirms that paths 3 and 4 have not been set (YES in step S814), and the processing proceeds to step S815. In step S815, the second check unit 335 confirms that there are one available video time slot (YES in step S815), and the processing proceeds to step S816.

In step S816, the third extraction unit 336 extracts path 3 with the hop number 2. In this step, since paths 1 and 2 have already been set, the third extraction unit 336 does not extract paths 1 and 2. In step S817, the fourth extraction unit 337 extracts path 3 as a path with the highest communication quality (RSSI values 9 (for node 101 to relay node 103) and 10 (for node 103 to node 102) in this example, as determined from the table 1001).

In step S821, the first determination unit 338 determines whether the link transmission node constituting the paths 1 or 2 and the link transmission node constituting the path 3 has the common link transmission node. In this example, since paths 1 to 3 include the control node 101 as the common link transmission node (YES in step S821), the processing proceeds to step S822.

In step S822, the CPU 301 instructs the second determination unit 342 to determine whether the link reception node corresponding to the common link transmission node is the same link transmission node. In this example, while the control node 101 transmits data to the reception node 102 both in paths 1 and 2, the control node 101 transmits data to the relay node 103 in path 3. Thus, the second determination unit 342 determines that the link reception node of path 3 is different from that of paths 1 and 2 (NO in step S822), and the processing proceeds to step S823.

In step S823, the CPU 301 instructs the third determination unit 343 to determine whether the common link transmission node can use the same time slot thereof to transmit data to different link reception nodes with communication quality equal to or greater than a threshold (RSSI level 7 or greater). This is where the determination of whether a single time slot for different links may be possible, thus "doubling up" the paths used within a single time slot.

The third determination unit 343 determines the communication quality based on a communication quality table (the RSSI table 1001 in this example). The threshold used in step S823 may be smaller than that used in step S813 (RSSI level 6, for example).

If the link transmission node can transmit data by using the same time slot thereof (YES in step S823), the processing proceeds to step S824. If not (NO in step S823), the processing proceeds to step S818.

In this example, the control node 101 sets the antenna radiation pattern to Wide to transmit data because more than one reception node may thus receive the data. The reception node 102 and the relay node 103 set their respective antenna orientations to 90° and 135° to receive this transmitted data.

Namely, the control node 101 changes the antenna radiation pattern from Narrow to Wide. In this way, the control node 101 can simultaneously transmit data with communication quality equal to or greater than a threshold (RSSI value 7 or greater) (YES in step S823). Thus, the processing proceeds to step S824.

In step S824, the CPU 301 instructs the calculation unit 339 to calculate the number of available time slots required by the candidate path. In this example, since slot 1 is used to transmit data from the control node 101 to the relay node 103, the number of available time slots necessary to transmit data from the relay node 103 to the reception node 102 is also needed. Thus, the calculation unit 339 calculates the number of available time slots required by the candidate path to be 1.

In step S825, the CPU 301 instructs the third check unit 340 to check whether the number of available video time slots is equal to or greater than the number of available time slots calculated in step S824. If the third check unit 340 determines that there is a sufficient number of available video time slots (YES in step S825), the processing proceeds to step S826. If not (NO in step S825), the CPU 301 ends the flow chart of Fig. 8C.

Since the number of available video time slots, which is 1 in this example, is equal to or greater than the number of available video time slots required by the candidate path, which is 1 in this example (YES in step S825), the processing proceeds to step S826.

In step S826, the CPU 301 instructs the setting unit 341 to set the link transmission node and the link reception node of a communication path of the candidate path (path 3 in this example) in the available video time slot.

Regarding the identical video time slot used to transmit data to different link reception nodes with communication quality equal to or greater than a threshold, the control node 101 changes the setting information of the video time slot. In this example, the control node 101 changes the setting information about slot 1. More specifically, the control node 101 sets the antenna radiation pattern of the link transmission node to Wide (to cover multiple orientations) and sets the antenna orientations of each of the reception node 102 and the relay node 103 as link reception nodes to 90° and 135°, respectively, to enable reception of the transmitted data.

In addition, the control node 101 sets the antenna orientation of the relay node 103 as the link transmission node of slot 3 to 45°and the antennal orientation of the reception node 102 as the link reception node to 135°. Alternatively, instead of changing the setting information about slot 1, the control node 101 may change the setting information about slot 2.

In this way, if an identical video time slot can be used to transmit data to different link reception nodes with a communication quality level equal to or greater than a threshold, the control node 101 changes the setting information of the video time slot. Thus, video time slots can be used effectively.

Namely, the number of paths for relay can be increased by changing the antenna radiation pattern of a communication apparatus from Narrow to Wide.

In this way, since redundant transmission (i.e. plural transmissions) of data can be performed by using more paths, reliability of data transmission is improved. In addition, time slots can be used more effectively.

Next, in step S814 again, the first check unit 334 confirms that path 4 has not been set (YES in step S814), and the processing proceeds to step S815. In step S815, the second check unit 335 confirms that there is no available video time slot (NO in step S815), and the CPU 301 ends the flow chart of Fig. 8C.

As described above, the CPU 301 allocates time slots as illustrated in Fig. 7C. Thus, when communication apparatuses perform redundant transmission of data by using a limited number of time slots, since each communication apparatus transmits data by using an antenna orientation exhibiting good apparatus-to-apparatus communication quality per time slot, data reception quality is improved.

The embodiments above may be realized by supplying a non-transitory computer-readable storage medium in which software program codes realizing the above functions are stored to a system or an apparatus and by causing the system or the apparatus to read and execute the program codes stored in the storage medium.

While the present invention has been described with reference to exemplary embodiments, it is to be understood that the invention is not limited to the disclosed exemplary embodiments. The scope of the following claims is to be accorded the broadest interpretation so as to encompass all modifications, equivalent structures, and functions. Further examples of the invention are defined as follows. There may be included a control method of a control apparatus used in a system in which a transmission source apparatus transmits identical data to a destination apparatus a plurality of times via a plurality of different paths that are formed by a combination of communication paths through which two communication apparatuses directly communicate with each other in each of the communication paths, the control method comprising:
acquiring communication quality information for each antenna orientation of each of the communication apparatuses forming the communication paths;
selecting a plurality of paths exhibiting communication quality exceeding a predetermined threshold, based on the acquired communication quality information; and
determining a timing of switching an antenna orientation of each of the communication apparatuses in each of the selected paths to an orientation of each of the selected paths.
There may be further provided a control method of a relay apparatus used in a system in which a transmission source apparatus transmits identical data to a destination apparatus a plurality of times in a time-division manner via a plurality of different paths that are formed by a combination of communication paths through which two communication apparatuses directly communicate with each other in each of the communication paths, the control method apparatus comprising:
   measuring communication quality for each antenna orientation between a communication apparatus and the relay apparatus forming one of the communication paths;
   transmitting information about the measured communication quality to a control apparatus; and
   switching an antenna orientation according to a timing given by the control apparatus that selects, from the plurality of paths, a plurality of paths exhibiting higher communication quality than a certain threshold based on the transmitted information about the communication quality.

## Claims

1. A control apparatus (101) for use in a system in which a transmission source apparatus transmits data to a destination apparatus (102) a plurality of times via a plurality of different communication paths comprising at least one path link each formed by two communication apparatuses (103, 104) directly communicating with each other using at least one of a plurality of antenna radiation patterns, the control apparatus (101) comprising:
acquisition means (307) configured to acquire communication quality information for each antenna radiation pattern of each communication apparatus forming the path links of the communication paths;
selection means (309) configured to select a plurality of communication paths exhibiting high communication quality based on the communication quality information acquired by the acquisition means (307); and
first allocation means configured to allocate, to a time slot, a path link of the selected communication paths and an associated antenna radiation pattern for each communication apparatus forming the allocated path link.

2. The control apparatus (101) according to claim 1, further comprising:
checking means (340) for checking whether a number of time slots available for the transmission of the data is greater than or equal to a number of time slots required for a selected communication path; and
setting means (341) for, if the result of the checking is positive, setting antenna radiation patterns for each path link of the selected communication path.

3. The control apparatus (101) according to claim 1 or 2, further comprising notification means (310) configured to notify at least one communication apparatus (103) forming at least one of the plurality of communication paths selected by the selection means (309) of the set antenna radiation pattern.

4. The control apparatus (101) according to claim 3,
wherein the notification means (310) is configured to notify each of the communication apparatuses forming the plurality of communication paths selected by the selection means of a timing of a switch of an antenna radiation pattern based on the timing of a change of time slot allocated to each path link.

5. The control apparatus (101) according to any one of claims 1 to 4, wherein the selection means (309) is configured to select a plurality of communication paths with a smallest number of path links from the transmission source apparatus to the destination apparatus (102), the selection being made from a plurality of communication paths exhibiting communication quality exceeding a predetermined threshold.

6. The control apparatus (101) according to any one of claims 1 to 5, wherein the acquisition means (307) is configured to acquire communication quality information between each pair of communication apparatuses forming the path links of the communication paths from the transmission source apparatus to the destination apparatus (102).

7. The control apparatus (101) according to any one of claims 1 to 6, further comprising change means configured to change an antenna radiation pattern of a communication apparatus if such a change of the antenna radiation pattern increases the number of communication paths via which the transmission source apparatus can transmit the data to the destination apparatus within a predetermined time.

8. The control apparatus (101) according to any one of claims 1 to 6, further comprising:
second allocation means configured to allocate, to a time slot, at least one communication path formed by at least one communication apparatus transmitting the data using an antenna with a wide radiation pattern.

9. The control apparatus (101) according to claim 8, further comprising:
switch means configured to switch between allocation by the first allocation means (338) and allocation by the second allocation means (342) depending on at least one of: the number of intended destination apparatuses of the data and the type of data being transmitted.

10. The control apparatus (101) according to claim 9, wherein the switch means is configured to switch to the allocation by the first allocation means (338) when the data has a single destination address and to the allocation by the second allocation means (342) when the data has a plurality of destination addresses.

11. The control apparatus (101) according to claim 9, wherein the switch means is configured to switch to the first allocation means (338) when the data is video data and to the allocation by the second allocation means (342) when the data is audio data.

12. The control apparatus (101) according to any one of claims 1 to 11, further comprising switch means configured to switch between a first transmission method in which all the communication apparatuses forming the communication paths transmit the data using antennae with wide radiation patterns and a second transmission method in which at least one of the communication apparatuses forming the communication paths transmits the data using an antenna with a narrow radiation pattern, depending on the type of the data being transmitted.

13. A relay apparatus (103, 104) for use in a system in which a transmission source apparatus transmits data to a destination apparatus (102) a plurality of times in a time-division manner via a plurality of different communication paths comprising a combination of path links formed by two communication apparatuses directly communicating with each other by means of antenna radiation, the relay apparatus (103, 104) comprising:
measurement means configured to measure communication quality for each antenna radiation pattern between a communication apparatus and the relay apparatus forming one of the path links;
transmission means configured to transmit information about the communication quality measured by the measurement means to a control apparatus (101); and
switch means configured to switch an antenna radiation pattern according to a timing given by the control apparatus, the switch means thereby selecting, from the plurality of communication paths, a plurality of communication paths exhibiting higher communication quality than a predetermined threshold, the selecting being based on the information about the communication quality transmitted from the transmission means.

14. A system in which a transmission source apparatus transmits data to a destination apparatus a plurality of times via a plurality of different communication paths comprising a combination of path links formed by two communication apparatuses directly communicating with each other using antenna radiation, the system comprising:
a control apparatus (101) according to any one of claims 1 to 12;
at least one relay apparatus (103, 104) according to claim 13; and
a destination apparatus (102).

15. A method of transmitting a data stream comprising a plurality of time slots containing data from a transmission node (100) to a reception node (102) in a system that comprises the transmission node (101), the reception node (102) and at least one relay node (103, 104), the method comprising:
extracting (S812) a plurality of communication paths that include at least two of: a direct communication path between the transmission source node and the reception node and at least one indirect communication path between the transmission source node and the reception node via at least one relay node; and
allocating (S820, S826) each extracted communication path to at least one time slot.

16. A method according to claim 15, wherein each node communicates via antenna radiation, each antenna of each node having a settable antenna radiation pattern, the method further comprising:
acquiring communication quality information for each antenna radiation pattern of each node,
wherein the extracting step comprises extracting communication paths between nodes with a communication quality above a predetermined threshold.

17. A method according to claim 15 or 16, further comprising:
determining the number of time slots required by a communication path;
determining the number of available time slots in the data stream; and
extracting a communication path that requires a number of time slots that is less than or equal to the number of time slots available.

18. A method according to any one of claims 15, 16 or 17, further comprising:
extracting a communication path that comprises the lowest number of path links between nodes.

19. A method according to claim 18, further comprising, of the extracted communication paths, further extracting a communication path that has the greatest communication quality.

20. A method according to any one of claims 15 to 19, further comprising:
determining whether a first node is capable of transmitting data to more than one other node within more than one communication path during a time slot.

21. A method according to claim 20, further comprising
changing the radiation pattern of the antenna of at least one of the first node and the more than one other node if changing said radiation pattern enables the first node to transmit data to the more than one other node within the time slot.

22. A method according to claim 20 or 21, comprising allocating more than one communication path to a time slot if the first node is capable of transmitting data to more than one other node within said more than one communication path during the time slot.

23. A computer program which, when run on a computer, causes the computer to perform the method according to claims 15 to 22.

24. A non-transitory computer-readable storage medium having stored thereon a computer program according to claim 23.
